# EUROPÄISCHE PATENTANMELDUNG

(11) **EP 2 498 010 A2**
(43) Veröffentlichungstag der Anmeldung: **12.09.2012**
(21) Anmeldenummer: 12001529.2
(22) Anmeldetag: 06.03.2012
(51) Int. Cl.: F24D 11/00, F24D 19/10

(54) **Verfahren zur Rücklauftemperaturanhebung sowie eine Vorrichtung zur Rücklauftemperaturanhebung**

(30) Priorität: 11.03.2011 DE 102011013642
(71) Anmelder: Gebr. Tuxhorn GmbH & Co. KG, 33647 Bielefeld (DE)
(72) Erfinder: Imrecke, Peter, Dipl.-Ing., 33619 Bielefeld (DE)
(74) Vertreter: Laufhütte, Dieter

(57) **Zusammenfassung**

Die Erfindung betrifft ein Verfahren zur Rücklauftemperaturanhebung in einem Heizungssystem, wobei über einen vorgesehenen Regler die Heizungsrücklauftemperatur um einen definierten Temperaturdifferenzwert angehoben wird und der Temperaturdifferenzwert in Abhängigkeit ein oder mehrerer Parameter während des Heizungsbetriebs bestimmt wird.

## Beschreibung

Die Erfindung betrifft ein Verfahren zur Rücklauftemperaturanhebung in einem Heizungssystem, wobei über einen vorgesehenen Regler die Heizungsrücklauftemperatur um einen Temperaturdifferenzwert angehoben wird.

Gattungsgemäße Verfahren bzw. Vorrichtungen werden insbesondere in der Gebäudeheizungstechnik eingesetzt. Die Rücklaufanhebung dient in der Heizungstechnik entweder zur Vermeidung von zu niedrigen Rücklauftemperaturen, die unter Umständen Beschädigungen des Heizungssystems verursachen können, oder zur Energieeinsparung durch den Einsatz unterstützender alternativer Energiequellen. Beispielsweise kann die durch eine Solaranlage gewonnene Energie in Wärmeenergie umgewandelt werden, um das Temperaturniveau innerhalb des Heizungsrücklaufs anzuheben. Der notwendige Energiebedarf des Heizungskessels zum Aufbau des erforderlichen Temperaturniveaus im Vorlauf kann aufgrund der Restwärme im Rücklauf merklich reduziert werden. Unter Umständen kann durch eine entsprechende Regelung der tatsächliche Kesselbetrieb auf ein Minimum begrenzt werden.

Eine Heizung mit einem Verfahren zur Rücklauftemperaturanhebung ist aus der DE 200 01 539 U1 bekannt. Die darin offenbarte Heizung weist einen integrierten Regler auf, der auf Grundlage einer manuell voreingestellten Temperaturdifferenz eine entsprechende Anhebung der Kesselrücklauftemperatur mit Hilfe der Wärmeenergie aus einem Speicher, die über einen integrierten Motormischer beigefügt wird, bewirkt. Hierzu wird über Temperaturfühler die Temperatur des Heizungsrücklaufs, des Speichers und des Kesselrücklaufs gemessen. Als Voraussetzung für die nachfolgende Regelung gilt, dass die Speichertemperatur größer als die Kesselrücklauftemperatur ist.

Ein entscheidender Nachteil der aufgezeigten Lösung besteht darin, dass die ausgeregelte Temperaturdifferenz immer zum einmalig festgelegten Temperaturdifferenzwert im Regler konstant ist. Der entsprechende Wert wird vor Inbetriebnahme der Heizung festgelegt und bleibt während des Heizungsbetriebs durchgehend unverändert.

Ferner ist es heutzutage üblich, die Kesselvorlauftemperatur in Abhängigkeit der Außentemperatur anzupassen. Man spricht dann von einer Außentemperatursteuerung bzw. von einer gleitenden außentemperaturabhängigen Kesselvorlauftemperatur. Eine derartige Forderung ist allerdings aufgrund der als konstant angenommenen Temperaturdifferenz über die dargestellte Rücklaufanhebungsgruppe nicht einfach zu realisieren.

Aufgabe der vorliegenden Erfindung ist es daher, ein diesbezüglich optimiertes Verfahren sowie eine verbesserte Vorrichtung zur Rücklauftemperaturanhebung aufzuzeigen.

Die gestellte Aufgabe wird zum einen durch ein Verfahren zur Rücklauftemperaturanhebung in einem Heizungssystem mit den Merkmalen des Anspruchs 1 gelöst. Ähnlich zu dem vorgestellten gattungsgemäßen Verfahren wird über einen vorgesehenen Regler des Heizungssystems die Heizungsrücklauftemperatur um einen definierten Temperaturdifferenzwert angehoben. Dieser Temperaturdifferenzwert wird allerdings nicht als konstant angenommen sondern wird erfindungsgemäß in Abhängigkeit von einem oder mehreren Parametern während des laufenden Heizungsbetriebes bestimmt. Die Ermittlung des Temperaturdifferenzwertes kann kontinuierlich oder in bestimmten Zeitintervallen erfolgen. Erfindungswesentlich gegenüber dem Stand der Technik ist demnach die Verwendung eines variablen Temperaturdifferenzwertes, der eine effiziente Anpassung an ein oder mehrere Parameter, beispielsweise an äußere Systemeinflüsse erlaubt. Die Anpassung bewirkt eine optimierte Rücklauftemperaturanhebung, was zu einem gegenüber dem Stand der Technik besonders energieeffizienten und ressourcenschonenden Betrieb des Heizungssystems führt.

Insbesondere wird der Temperaturdifferenzwert in Abhängigkeit der Außentemperatur bestimmt. Vorteilhafterweise steigt der Temperaturdifferenzwert mit abnehmender Außentemperatur und fällt bei zunehmender Außentemperatur.

Durch eine ausreichend hohe Rücklauftemperatur kann beispielsweise ein Kesselstart zur Erreichung der erforderlichen Vorlauftemperatur vermieden werden, was ein erhebliches Einsparpotential bietet. Weiterhin kann in Schwachlastzeiten, das heißt bei vergleichsweise hoher Außentemperatur, eine irrationale Temperaturanhebung aufgrund eines zu groß gewählten Temperaturdifferenzwertes verhindert und ein unnötiger Heizenergieverbrauch vermieden werden.

Zur Einsparung von Produktions- und Betriebskosten ist der Regler für die Rücklauftemperaturanhebung ohne Messmittel zur Erfassung der Außentemperatur ausgerüstet, das heißt die entsprechende Baugruppe kann keine außentemperaturabhängigen Heizkurven erstellen und weist keinen eigenen Außentemperaturfühler auf. Vor diesem Hintergrund ist es zweckmäßig, dass die Außentemperatur für die Bestimmung des Temperaturdifferenzwertes auf Grundlage ein oder mehrerer eine fiktive Außentemperatur kennzeichnender Werte ermittelt wird. Die Außentemperatur wird beispielsweise anhand einer hinterlegten Tabelle, bestimmter Referenzkurven, Erfahrungswerte oder dergleichen ermittelt und für die Bestimmung des Temperaturdifferenzwertes herangezogen.

In einer besonders bevorzugten Ausgestaltung des erfindungsgemäßen Verfahrens wird die Außentemperatur anhand des Verlaufs der Jahresdurchschnittstemperatur für den gegenwärtigen Zeitraum ermittelt. Hierfür kann auf eine Jahresdurchschnittstemperaturkurve zurückgegriffen werden, d.h. auf eine Kurve, welche den Verlauf der Durchschnittstemperatur über das Jahr wiedergibt. Vorteilhafterweise ist die Jahresdurchschnittstemperaturkurve dabei in einem Speicher hinterlegt und wird von Steuermitteln ausgelesen. Beispielsweise wird auf eine Jahresdurchschnittstemperaturkurve nach Kalendertagen oder Kalenderwochen zurückgegriffen und der aktuelle Außentemperaturwert für den entsprechenden Kalendertag bzw. die aktuelle Kalenderwoche ausgelesen.

In einer vorteilhaften Ausgestaltung der Erfindung basiert die Temperaturanhebung der Heizungsrücklauftemperatur auf einer Zuführung von Wärmeenergie aus einer separaten Wärmequelle. Unter einer separaten Wärmequelle ist eine zusätzliche Wärmeenergiequelle zur Primärquelle, das heißt dem Heizkessel, zu verstehen. Als mögliche sekundäre Wärmequellen kommen prinzipiell ein Wärmespeicher, eine Solaranlage oder eine sonstige Wärmeenergie erzeugende Anlage in Betracht. Grundsätzlich sind sämtliche Anlagen zur Energiegewinnung aus erneuerbaren Energien denkbar.

Es ist möglich, dass ein vorgesehener Wärmeenergiespeicher in Schwachlastzeiten durch die überschüssige Wärmeenergie des Heizungsrücklaufs gefüllt wird und/oder durch wenigstens eine zusätzliche Wärmequelle gespeist wird.

Es kann zweckmäßig sein, eine Begrenzung des maximalen Temperaturdifferenzwertes vorzunehmen, um den unnötigen Heizenergieverbrauch möglichst gering zu halten. Dies ist insbesondere in Schwachlastzeiten zweckmäßig.

Im Heizkessel wird vorteilhafterweise über die Außentemperaturregelung des Heizkessels die erforderliche Vorlauftemperatur mit der zugeführten Heizungsrücklauftemperatur abgeglichen. Nur bei Bedarf wird der Heizungskessel gestartet. Das Wärmeenergieträgermedium wird mit der eingestellten Vorlauftemperatur zum Verbraucher gefördert.

Die Steuerung des Heizkessels kann dabei einen Außentemperaturfühler aufweisen, über welchen die Außentemperatur für die Außentemperaturregelung bestimmt wird. Vorteilhafterweise wird für die Rücklauftemperaturanhebung jedoch nicht auf diese Daten zurückgegriffen, da dies ein Nachrüsten bestehender Anlagen, bei welchen ein Auslesen dieser Daten nicht möglich ist, verhindern würde.

Die Erfindung ist weiterhin auf eine Vorrichtung zur Rücklauftemperaturanhebung in einem Heizungssystem gerichtet. Insbesondere besitzt die Vorrichtung Anschlussmittel zur Verbindung mit dem Heizungsrücklauf sowie Anschlussmittel zur Verbindung mit dem Heizkessel. Im nachfolgenden wird die Strecke von dem oder den Verbrauchern zur Vorrichtung als Heizungsrücklauf und der Streckenabschnitt zwischen Vorrichtung und Heizkessel als Kesselrücklauf bezeichnet. Darüber hinaus sind Messmittel vorgesehen, die zur Erfassung der Temperatur im Heizungsrücklauf sowie der Temperatur im Kesselrücklauf geeignet sind. Weiterhin ist ein Regelmittel vorgesehen, das die Temperatur des Kesselrücklaufs um einen definierten Temperaturdifferenzwert gegenüber dem Heizungsrücklauf erhöht.

Erfindungsgemäß sind nun Steuermittel vorgesehen, die während des Heizungsbetriebs in Abhängigkeit von einem oder mehreren Parametern einen Temperaturdifferenzwert ermitteln und dem Regelmittel zuführen. Der verwendete Temperaturdifferenzwert kann hinsichtlich des bestehenden Betriebszustandes, der durch ein oder mehrere Parameter charakterisiert ist, optimiert werden, um das Energiesparpotential eines Heizungssystems optimal auszuschöpfen. Die Vorrichtung erlaubt demnach eine positive Beeinflussung der Kesseleinsatzzeiten eines Heizungssystems sowie die ressourcenschonende Verwendung sonstiger unterstützender Energiequellen.

Insbesondere wird der Temperaturdifferenzwert in Abhängigkeit der gegenwärtigen Außentemperatur bestimmt.

Vorzugsweise umfasst die Vorrichtung wenigstens einen Wärmeenergiespeicher oder wenigstens eine sonstige zusätzliche Wärmeenergiequelle. Alternativ ist die Vorrichtung mit wenigstens einem Wärmeenergiespeicher oder mindestens einer zusätzlichen Energiequelle verbindbar ausgeführt. Die gespeicherte/gewonnene Wärmeenergie ist durch das Regelmittel dem Kesselrücklauf zur Temperaturanhebung der Kesselrücklauftemperatur mittelbar/unmittelbar zuführbar.

Hierzu umfasst das Regelmittel vorzugsweise wenigstens ein regelbares Mischventil zur Regelung des Anteilverhältnisses der Wärmeenergie einer zusätzlichen Wärmequelle und/oder eines Wärmespeichers im Kesselrücklauf. Das Mischventil ist insbesondere motorgesteuert ausgeführt und ist in Abhängigkeit des durch das Steuermittel zur Verfügung gestellten Temperaturdifferenzwertes einstellbar bzw. ansteuerbar, um die erforderliche Temperaturdifferenz im Kesselrücklauf gegenüber dem Heizungsrücklauf zu erreichen.

Das Mischventil ist eingangsseitig mit dem Heizungsrücklauf sowie mit mindestens einem Wärmespeicher bzw. wenigstens einer Wärmequelle verbunden und ausgangsseitig mit dem Kesselrücklauf.

Zur Bestimmung des Temperaturdifferenzwertes ist es zweckmäßig, dass das Steuermittel einen Datenspeicher zur Hinterlegung ein oder mehrerer eine fiktive Außentemperatur kennzeichnender Werte aufweist. Insbesondere stellen die hinterlegten Werte jahreszeitabhängige Außentemperaturen da. Vorteilhaft ist in diesem Zusammenhang die Hinterlegung einer Jahresdurchschnittstemperaturkurve nach Kalendertag oder Kalenderwoche, der für jeden möglichen Jahreszeitpunkt eine entsprechende Durchschnittstemperatur für die Außentemperatur beinhaltet.

Die erfindungsgemäße Vorrichtung kann zum Nachrüsten eines Heizungssystems mit einer erneuerbaren Energiequelle, wie z. B. einer Solaranlage, in eine vorhandene Heizungsanlage eingebunden werden. Derartige Umbaumaßnahmen sollen möglichst aufwandsreduziert erfolgen. In einer vorteilhaften Ausführung der Vorrichtung kann es daher zweckmäßig sein, dass die Anschlussmittel zur Integration der Vorrichtung in den bestehenden Heizungsrücklauf eines Heizungssystems zueinander benachbart, besonders bevorzugt an einer Vorrichtungsseite angeordnet sind. Denkbar ist es, dass der Anschluss für den Heizungsrücklauf sowie der Anschluss für den Kesselrücklauf zueinander benachbart an der Vorrichtung angeordnet sind. Diese Anschlussvariante ermöglicht die einfache Nachrüstung bestehender Heizungsanlagen. Nachdem Auftrennen der bestehenden Rohrleitungen des bestehenden Heizungssystems kann die Vorrichtung ohne umständliche Neuverrohrung eingebunden werden.

Gleiches gilt beispielsweise für die Anschlussmöglichkeit einer externen Wärmequelle, wie beispielsweise eines Wärmeenergiespeichers. Beide Anschlussstellen, das heißt der Vorlauf- sowie Rücklaufanschluss zum Wärmeenergiespeicher sind benachbart zueinander an der Vorrichtung angeordnet. Insbesondere ist die Anordnung der Anschlussstellen an der Unterseite der Vorrichtung vorteilhaft.

Die erfindungsgemäße Vorrichtung gemäß einer der voranstehend erläuterten vorteilhaften Ausführungen ist besonders vorteilhaft zur Ausführung des erfindungsgemäßen Verfahrens gemäß einem der Ansprüche 1 bis 7 geeignet. Die Vorrichtung weist offensichtlich dieselben Vorteile und Eigenschaften wie das erfindungsgemäße Verfahren auf, weshalb an dieser Stelle auf eine wiederholende Beschreibung verzichtet wird. Insbesondere sind die Steuermittel der Vorrichtung dabei so ausgeführt, dass die das erfindungsgemäße Verfahren selbsttätig durchführen.

Ferner ist die vorliegende Erfindung auf ein Heizungssystem mit einem ein oder mehrere Verbraucher aufweisenden Heizkreislauf und wenigstens einem Heizkessel gerichtet, wobei erfindungsgemäß im Heizungsrücklauf des Heizkreislaufes eine Vorrichtung nach einer der voranstehend beschriebenen vorteilhaften Ausführungen angeordnet ist. Die Vorteile und Eigenschaften des erfindungsgemäßen Heizsystems entsprechen denen der erfindungsgemäßen Vorrichtung.

Weitere Vorteile und Einzelheiten der Erfindung werden anhand eines in den Zeichnungen dargestellten Ausführungsbeispiels näher erläutert. Es zeigen:
- Figur 1:: ein schematisches Blockschaltbild des erfindungsgemäßen Heizungssystems und
- Figur 2:: ein Schaltbild der erfindungsgemäßen Vorrichtung zur Rücklauftemperaturanhebung in einem Heizungssystem.

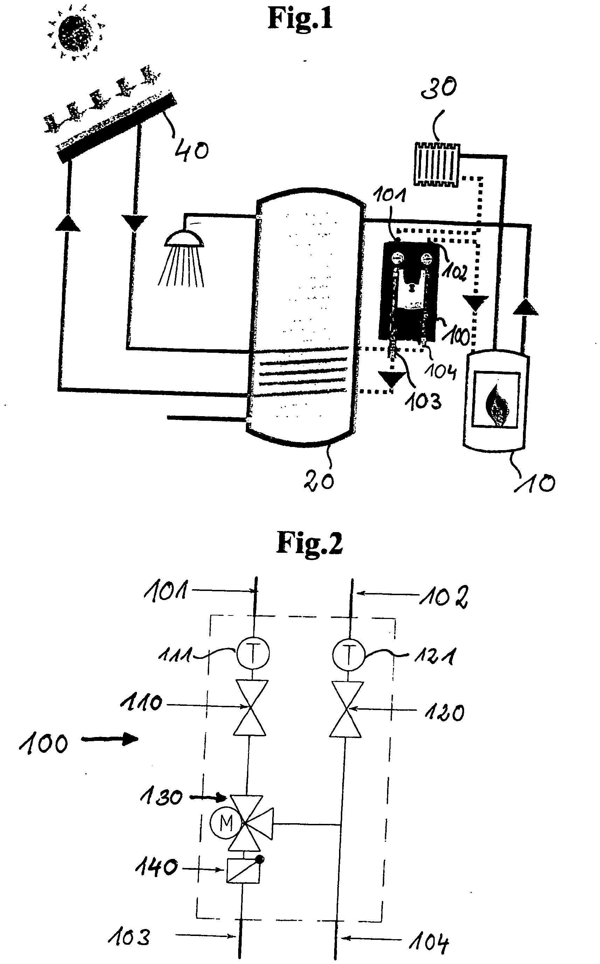

Figur 1 zeigt ein Blockschaltbild eines möglichen Aufbaus einer modernen Gebäudeheizung. Das Heizungssystem umfasst als primäre Wärmeenergiequelle einen an sich bekannten Kessel 10, der das in den Heizungsleitungen strömende Wärmeträgermedium, beispielsweise Wasser, auf die gewünschte Vorlauftemperatur erwärmt und über den Vorlauf zu den Verbrauchern, die in der Figur 1 exemplarisch als Heizkörper 30 dargestellt sind, fördert. Die Förderung des Mediums erfolgt durch bekannte Umwälzpumpen, die in der Zeichnung aus Gründen der Übersichtlichkeit weggelassen wurden. Die interne Kesselsteuerung ist nach dem Grundprinzip einer Außentemperatursteuerung aufgebaut, um eine gleitende außentemperaturabhängige Kesselvorlauftemperatur einstellen zu können.

Weiterhin steht ein Vorlauf des Kessels 10 mit dem Wärmeenergiespeicher 20 in Verbindung. Der Speicher 20 wird demnach durch den Kessel 10 mit Wärmemedium auf entsprechendes Temperaturniveau gespeist. Zusätzlich ist der Speicher 20 mit der sekundären Wärmeenergiequelle 40 verbunden, die in der Darstellung der Figur 1 als Solarthermieanlage ausgeführt ist. Die aus Sonnenenergie bezogene Energie wird in Wärmeenergie gewandelt und im Speicher 20 gespeichert.

Erfindungsgemäß ist nun die erfindungsgegenständliche Armaturengruppe 100 in den Heizungsrücklauf des Heizungssystems eingebunden. Zum einen ist die Armaturengruppe 100 über das Anschlussmittel 101 an den von dem Heizkörper 30 ausgehenden Heizungsrücklauf gekoppelt und steht ausgangsseitig über das Anschlussmittel 102 mit dem zum Kessel 10 führenden Kesselrücklauf in Verbindung.

Für eine vereinfachte Montage sind beide notwendigen Anschlussmittel 101, 102 benachbart auf der Oberseite der Armaturengruppe 100 angeordnet. Die vorteilhafte Anordnung der Anschlussmittel 101, 102 erlaubt eine einfache Nachrüstung bestehender Heizungssysteme, da eine Einbindung in den Heizungsrücklauf ohne aufwendige Neuverrohrung möglich ist.

Die Unterseite der Armaturengruppe 100 umfasst die ebenfalls benachbarten Anschlussmittel 103, 104 für die Anbindung der Vorlauf- und Rücklaufleitung des Speichers 20.

Im Gegensatz zum Stand der Technik wird anstatt eines konstanten Temperaturdifferenzwertes ein variierender Temperaturdifferenzwert für die Rücklauftemperaturanhebungssteuerung angenommen. Die Steuerung der Armaturengruppe 100 greift hierzu auf eine in einem Speicher hinterlegte Jahresdurchschnittstemperaturkurve nach Kalendertagen zurück, die in den Regler der Armaturengruppe 100 eingelesen wird. Hieraus ableitend kann nach dem Kalendertag des Jahres ein erforderlicher Temperaturdifferenzwert für die Rücklaufanhebung errechnet werden. Die resultierende Kesselrücklauftemperatur wird über den Motormischer eingestellt und zum Kessel 10 über die im Heizungssystem integrierte Pumpe gefördert.

Im Heizkessel 10 wird von der Kesselaußentemperaturregelung ein Abgleich der gewünschten Vorlauftemperatur mit der zugeführten Rücklauftemperatur durchgeführt und für die Betriebssteuerung des Kessels berücksichtigt. Erreicht die Rücklauftemperatur die eingestellte Zieltemperatur des Heizungsvorlaufs, so kann ein Kesselstart umgangen werden. Ansonsten erzeugt der Kessel die erforderliche Vorlauftemperatur.

Die Steuerung des Heizkessels 10 kann dabei einen Außentemperaturfühler aufweisen, über welchen die Außentemperatur für eine Außentemperaturregelung der Vorlauftemperatur bestimmt wird. Die erfindungsgemäße Rücklauftemperaturanhebung greift jedoch nicht auf diese Daten zurück, da ein Auslesen dieser Daten bei bestehenden Heizungen nicht möglich ist. Die Verwendung von gespeicherten Durchschnittstemperaturen gemäß der vorliegenden Erfindung ermöglicht daher eine einfache Nachrüstbarkeit.

Im Gegensatz zur aus dem Stand der Technik bekannten konstanten Temperaturanhebung wird aufgrund der erfindungsgemäßen Ausführung mit anpassbarem Temperaturdifferenzwert in Schwachlastzeiten der Heizperiode die Temperatur im Heizungsrücklauf nicht unnötig weit angehoben. Eine unnötige Verschwendung der gespeicherten Wärmeenergie im Speicher 20 wird minimiert, das System arbeitet demnach wesentlich effizienter bzw. intelligenter.

Eine Schaltbilddarstellung der Armaturengruppe 100 ist der Figur 2 zu entnehmen. Die Eingänge der Armaturengruppe 100 für den Heizungs- sowie Kesselrücklauf sind mit den Bezugszeichen 101, 102 gekennzeichnet. Beide Eingänge weisen jeweils einen Kugelhahn 110, 120 mit integriertem Temperaturfühler und integriertem Thermometer 111, 121 zur exakten Temperaturbestimmung des Wärmeträgers in der jeweiligen Zuleitung auf. Die Steuerung der Armaturengruppe 100 erhält die ermittelten Messwerte und bestimmt den tatsächlichen Temperaturunterschied.

Diese teilt dem motorgesteuerten Dreiwegemischer 130 den gemessenen Temperaturunterschied sowie den aus der Jahresdurchschnittstemperaturkurve nach Kalendertagen berechneten außentemperaturabhängigen Temperaturdifferenzwert mit. Der Dreiwegemischer 130 regelt auf Grundlage der beiden Werte das Temperaturniveau im Kesselrücklauf 102, um die entsprechende Rücklauftemperaturanhebung auszuführen. Die Ventilstellung des 3-Wege-Mischers 130 bestimmt das Mischverhältnis aus dem eingangsseitig verbunden Heizungsrücklaufs sowie dem Speichervorlauf 103. Die integrierte Schwerkraftbremse 140 verhindert den Rückfluss des Wärmeträgermediums vom Speicher 20 über den Vorlauf 103.

Eine Temperaturanhebung im Kesselrücklauf 102 ist nur dann sinnvoll bzw. möglich, sobald die Speichertemperatur das Temperaturniveau des Heizungsrücklaufs 101 übersteigt. Vorab wird daher ein Abgleich der entsprechenden Temperaturen ausgeführt. Das erforderliche Temperaturniveau innerhalb des Speichers 20 wird beispielsweise durch ein oder mehrere Temperaturfühler im Speicher 20 bzw. innerhalb der Abgangsleitungen 104 bestimmt.

## Patentansprüche

1. Verfahren zur Rücklauftemperaturanhebung in einem Heizungssystem, wobei über einen vorgesehenen Regler die Heizungsrücklauftemperatur um einen definierten Temperaturdifferenzwert angehoben wird,
**dadurch gekennzeichnet,**
**dass** der Temperaturdifferenzwert in Abhängigkeit von einem oder mehreren Parametern während des Heizungsbetriebs bestimmt wird.

2. Verfahren nach Anspruch 1, **dadurch gekennzeichnet, dass** der Temperaturdifferenzwert in Abhängigkeit der Außentemperatur bestimmt wird, wobei der Temperaturdifferenzwert vorzugsweise mit abnehmender Außentemperatur zunimmt.

3. Verfahren nach Anspruch 2, **dadurch gekennzeichnet, dass** die Außentemperatur auf Grundlage ein oder mehrerer eine fiktive Außentemperatur kennzeichnender Werte ermittelt wird und der entsprechende Temperaturdifferenzwert anhand der ermittelten Außentemperatur bestimmt wird.

4. Verfahren nach Anspruch 2 oder 3, **dadurch gekennzeichnet, dass** die Außentemperatur anhand des Verlaufs der Jahresdurchschnittstemperatur für den gegenwärtigen Zeitraum ermittelt wird und der entsprechende Temperaturdifferenzwert auf Grundlage der ermittelten Außentemperatur bestimmt wird.

5. Verfahren nach einem der vorhergehenden Ansprüche, **dadurch gekennzeichnet, dass** eine Temperaturanhebung der Heizungsrücklauftemperatur durch Zuführen von Wärmeenergie aus einer separaten Wärmequelle, insbesondere einem Wärmespeicher und/oder einer Solaranlage erfolgt.

6. Verfahren nach einem der vorhergehenden Ansprüche, **dadurch gekennzeichnet, dass** im Heizkessel über die Außentemperaturregelung des Heizkessels die erforderliche Vorlauftemperatur mit der zugeführten Heizungsrücklauftemperatur abgeglichen und in den Heizkreislauf bis zum Verbraucher gefördert wird.

7. Verfahren nach einem der vorhergehenden Ansprüche, **dadurch gekennzeichnet, dass** der maximale Temperaturdifferenzwert begrenzbar ist.

8. Vorrichtung zur Rücklauftemperaturanhebung in einem Heizungssystem mit Anschlussmitteln zur Einbindung in den Heizungsrücklauf eines Heizungssystems, mit Messmitteln zur Erfassung der Temperatur im Heizungsrücklauf-und Kesselrücklauf sowie mit wenigstens einem Regelmittel, dass die Temperatur im Kesselrücklauf gegenüber der Temperatur im Heizungsrücklauf um einen definierten Temperaturdifferenzwert erhöht,
**dadurch gekennzeichnet,**
**dass** Steuermittel vorgesehen sind, die während des Heizungsbetriebs in Abhängigkeit von einem oder mehreren Parametern, insbesondere der Außentemperatur, den Temperaturdifferenzwert ermitteln und dem Regelmittel zuführen.

9. Vorrichtung nach Anspruch 8, **dadurch gekennzeichnet, dass** die Vorrichtung mit wenigstens einer zusätzlichen Wärmequelle, insbesondere wenigstens einem Wärmeenergiespeicher und/oder einer Solaranlage, verbindbar ist, wobei die bereitgestellte Wärmeenergie dem Kesselrücklauf durch das Regelmittel zur Temperaturanhebung zuführbar ist.

10. Vorrichtung nach einem der Ansprüche 8 oder 9, **dadurch gekennzeichnet, dass** das Regelmittel wenigstens ein regelbares Mischventil umfasst, wodurch dem Kesselrücklauf bedarfsweise Wärmeenergie einer Wärmequelle zuführbar ist.

11. Vorrichtung nach einem der Ansprüche 8 bis 10, **dadurch gekennzeichnet, dass** das Steuermittel einen Datenspeicher zur Hinterlegung ein oder mehrerer eine fiktive Außentemperatur kennzeichnender Werte, insbesondere zur Hinterlegung einer Jahresdurchschnittstemperaturkurve nach Kalendertagen oder Kalenderwochen, aufweist.

12. Vorrichtung nach einem der Ansprüche 8 bis 11, **dadurch gekennzeichnet, dass** die Anschlussmittel, insbesondere der Heizungsrücklaufanschluss und der Kesselrücklaufanschluss und/oder der Vorlauf- und Rücklaufanschluss für eine zusätzliche Wärmequelle, zueinander benachbart, besonders bevorzugt an einer Vorrichtungsseite angeordnet sind.

13. Vorrichtung nach einem der Ansprüche 8 bis 12, **dadurch gekennzeichnet, dass** die Vorrichtung zur Ausführung des Verfahrens nach einem der Ansprüche 1 bis 7 geeignet ist.

14. Heizungssystem mit einem Heizkreislauf und wenigstens einem Heizkessel, **dadurch gekennzeichnet, dass** im Heizungsrücklauf eine Vorrichtung nach einem der Ansprüche 8 bis 13 angeordnet ist.
